# FASCICULE DE BREVET EUROPEEN

(11) **EP 0 500 831 B1**
(45) Date de publication et mention de la délivrance du brevet: **23.03.1994**
(21) Numéro de dépôt: 91914305.7
(22) Date de dépôt: 25.07.1991
(51) Int. Cl.: B65B 3/32, G01G 15/00, G01F 11/02

(54) **PROCEDE ET DISPOSITF DE REGLAGE DES QUANTITES DE PRODUIT DOSEES ET DISTRIBUEES PAR UN DOSEUR-DISTRIBUTEUR**
VERFAHREN UND VORRICHTUNG ZUR EINSTELLUNG VON PRODUKTMENGEN, DOSIERT UND VERTEILT MITTELS EINES DOSIERSPENDERS
METHOD AND DEVICE FOR CONTROLLING THE AMOUNTS DOSED AND DISPENSED BY A DOSING/DISPENSING APPARATUS

(30) Priorité: 08.08.1990 FR 9010143
(43) Date de publication de la demande: 02.09.1992
(73) Titulaire: JAGENBERG Aktiengesellschaft, D-40476 Düsseldorf (DE)
(72) Inventeur: TORTEROTOT, Roland, F-78730 Longvilliers (FR)
(74) Mandataire: Hasenrader, Hubert
(86) Numéro de dépôt international: FR9100614
(87) Numéro de publication internationale: WO9202414

(56) Documents cités:
- CH-A- 336 312
- DE-A- 3 510 110
- FR-A- 2 067 983

## Description

La présente invention concerne un procédé et un dispositif de réglage des quantités de produit dosées et distribuées par un doseur-distributeur, alimentaire ou pharmaceutique, le produit se trouvant de préférence dans un état liquide et/ou pâteux.

L'objet de la présente invention s'applique plus particulièrement à un doseur-distributeur du type comportant, dans une première enceinte cylindrique, d'une part, une chambre supérieure d'alimentation raccordée par une conduite d'alimentation à un premier réservoir de stockage du produit et, d'autre part, une chambre inférieure de dosage, un piston-doseur qui coulisse de façon étanche dans ladite première enceinte et y sépare ladite chambre d'alimentation de ladite chambre de dosage et qui comprend un passage central constitutant le siège pour un clapet d'obturation d'une soupape d'admission ouvrant en direction de la chambre d'alimentation, un premier tube de commande pénétrant de façon étanche, ladite première enceinte dans laquelle il est fixé au piston-doseur et à l'extérieur de laquelle il est fixé au piston d'un premier vérin de commande dont le cylindre est monté sur un support de ladite première enceinte, ce doseur-distributeur comportant en outre un deuxième tube de commande dont la partie extrême inférieure pénètre de façon étanche dans ladite première enceinte, est guidée dans ledit premier tube de commande et est solidaire à son extrémité supérieure, d'un piston d'un deuxième vérin de comamnde incorporé dans ledit premier tube de commande, ainsi qu'une chambre de distribution raccordée, d'une part, à la sortie de la chambre de dosage et, d'autre part, à une tubulure d'éjection obturable par le clapet d'une soupape d'éjection.

Ce type de doseur-distributeur est décrit dans la demande de brevet FR 89 06316 du 12.5.1989 et dans la demande de brevet EP 90401252 du 15.5.1990 auxquelles on pourra se reporter pour plus de détails.

Dans une installation de conditionnement d'un produit liquide et/ou pâteux dans des récipients réalisés par therformage à partir d'une bande thermoplastique, on utilise plusieurs doseurs-distributeurs juxtaposés, en une rangée s'étendant transversalement par rapport au sens de défilement de la bande thermoplastique contenant des rangées transversales successives de récipients, rangées parallèles à celle des doseurs-distributeurs et avançant pas à pas avec la bande dans le sens de défilement de celle-ci.

Ces doseurs-distributeurs sont, comme d'autres (voir par exemple le brevet français 2 067 983), des doseurs volumétriques qui distribuent des quantités de produit déterminées pour une densité de produit donné. Il arrive fréquemment que la densité du produit varie localement de quelques pour cents de sorte que le poids des quantités de produit dosées volumétriquement et distribuées dans les récipients correspondants s'écarte au-delà des limites admises du poids théorique inscrit sur lesdits récipients. Pour supprimer les écarts en poids les plus importants, on pèse à intervalle régulier un récipient rempli et on compare son poids à un récipient étalon. Lorsque l'écart en poids ainsi constaté dépasse une valeur limite, on réajuste la course du piston-doseur de chacun des doseurs-distributeurs en fonction de l'écart en poids constaté dans la colonne des récipients servis pour tel ou tel doseur-distributeur. Ce réajustement nécessite évidemment l'arrêt de toute l'installation et en conséquence une perte en productivité.

Dans une autre installation connue par le brevet allemand 3 510 110, on vérifie de temps à autre la quantité dosée par le doseur en déviant de son circuit normal vers un récipient d'emballage une quantité dosée vers un récipient étalon disposé sur une balance de précision dont le signal de sortie correspondant au poids mesuré de ladite quantité dosée déviée est envoyé à l'entrée d'un ordinateur tel qu'un micro-processeur. Le signal correspondant au poids mesuré de la dose est comparé dans cet ordinateur à un signal étalon correspondant à un poids donné. S'il existe une différence entre les deux signaux, l'ordinateur émet un signal de correction pour modifier la course du piston du doseur dans le sens d'un rapprochement du poids réel de la dose au poids étalon. Pendant le processus, les récipients d'emballage ne sont pas remplis et le transport des récipients et l'actionnement de tous les autres éléments de l'installation de conditionnement sont arrêtés.

Un but de l'invention consiste à supprimer ou tout au moins atténuer les inconvénients mentionnés et à proposer un doseur-distributeur du type initialement mentionné ne nécessitant aucun arrêt de l'installation pour le réajustement des quantités dosées par chacun des doseurs-distributeurs.

Ce but est atteint du fait que le piston-doseur ou l'un des organes se déplaçant avec lui lors de ses courses ascendante et descendante correspondant respectivement à l'admission d'une quantité déterminée de produit dans la chambre de dosage et au refoulement de cette quantité hors de ladite chambre de dosage vers la tubulure d'éjection, est associé à deux butées de fin de course dont chacune détermine l'une des deux extrémités de fin de course, et dont au moins l'une est du type à position réglable pendant le fonctionnement du doseur-distributeur et de l'installation et en fonction de l'écart existant entre le poids mesuré d'une quantité de produit dosée et distribuée, et un poids-étalon prédéterminé.

Avantageusement, la butée réglable est reliée, par l'intermédiaire d'une transmission à broche et à écrou, à l'arbre de sortie d'un moteur pas à pas commandé en fonction de l'écart entre le poids réel mesuré et le poids étalon prédéterminé d'un récipient rempli ou d'un groupe de récipients remplis avec le produit.

Grâce à cette conception, le volume de produit dosé lors de la course ascendante et ensuite refoulé et distribué lors de la course descendante du piston-doseur peut être modifié à distance en fonction des besoins et sans arrêt de l'installation de conditionnement, par l'envoi de quelques impulsions de commande au moteur pas à pas du doseur-distributeur concerné. Un autre avantage de l'invention réside dans le fait que le volume de chaque doseur-distributeur peut être ajusté indépendamment de celui des autres doseurs-distributeurs et à des instants différents pour chacun desdits doseurs-distributeurs. Le dispositif de réglage selon l'invention permet en outre de corriger facilement les imprécisions de fabrication notamment celles de l'alésage de la chambre de dosage.

L'invention concerne aussi un procédé de réglage des quantités de produit dosées et distribuées par un doseur-distributeur du type initialement mentionné, ce procédé étant caractérisé par le fait que l'on mesure le poids d'au moins chaque n-ième récipients rempli par un même doseur-distributeur, le nombre entier n variant entre 1 et 1000, on compare chaque valeur de poids mesurée à une valeur-étalon prédéterminée et on règle pas à pas, et pendant le fonctionnement du doseur-distributeur, au moins l'une des positions extrêmes de course du piston-doseur dudit doseur-distributeur dans le sens d'une augmentation ou de diminution de la course de piston dès que l'écart entre le poids réel mesuré et le poids-étalon dépasse une valeur limite, et on continue ce réglage jusqu'à la disparition dudit écart.

Grâce à ce procédé, le poids du produit distribué dans chaque récipient reste pratiquement constant avec tout au plus des écarts extrêmement faibles et toujours en dessous des limités tolérées.

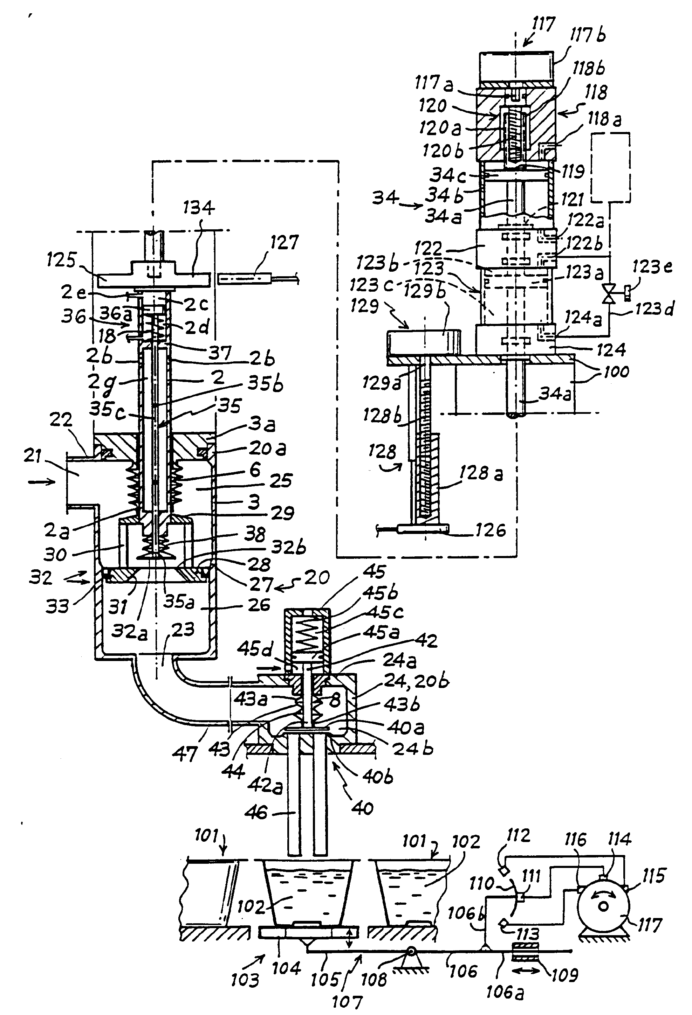

L'objet de l'invention sera encore mieux compris à l'aide de la description suivante de plusieurs modes de réalisation, description faite en référence au dessin sur lequel :
- la figure unique montre une vue schématique en élévation d'une coupe verticale axiale à travers un doseur-distributeur selon l'invention.

Tel que représenté sur le dessin, le doseur-distributeur 20 comprend une première enceinte 3, le cas échéant stérile, qui, à la partie extrême supérieure, comporte une ouverture latérale 21 raccordée en permanence par une conduite d'alimentation 22 à un premier réservoir de stockage non représenté contenant un premier produit alimentaire ou pharmaceutique pâteux ou liquide sous pression. Le fond de l'enceinte 3 présente une ouverture de sortie 23 qui est raccordée, dans le cas représenté, en permanence à une deuxième enceinte 24, le cas échéant également stérile.

La première enceinte 3 constitue la partie de dosage 20a du doseur-distributeur 20 et la deuxième enceinte 24 constitue la partie de distribution 20b dudit doseur-distributeur 20. La première enceinte 3 présente une configuration cylindrique et comporte de haut en bas, une chambre supérieure d'alimentation 25 reliée en permanence à la conduite d'alimentation et à travers celle-ci au premier réservoir de stockage, et une chambre inférieure de dosage 26 qui peut présenter un diamètre légèrement inférieur à celui de la chambre d'alimentation 25. L'extrémité inférieure de la chambre d'alimentation 25 se raccorde à l'extrémité supérieure de la chambre de dosage 26 par un rétreint annulaire tronconique 27 se rétrécissant de haut en bas en direction de la chambre de dosage 26. Un piston-doseur 28 est monté de façon mobile dans la chambre de dosage 26 et peut y coulisser de façon étanche entre une position inférieure, dite position de refoulement, et une position haute, dite position d'aspiration, dans laquelle il se trouve le cas échéant juste en dessous du rétreint tronconique 27 et sépare la chambre d'alimentation 25 de la chambre de dosage 26. Toutefois, la position haute du piston-doseur 28, de même que la position inférieure de celui-ci peuvent varier en fonction de la quantité de produit à doser par course dudit piston-doseur. Bien entendu, en vue du nettoyage et de la stérilisation, le piston-doseur 28 peut être placé dans une position plus élevée que la position haute normale. Ce piston-doseur 28 est fixé à la partie extrême inférieure du tronçon 2a d'un premier tube de commande 2 par l'intermédiaire d'une bride transversale ayant la forme d'un disque circulaire ou tronconique 29 et de plusieurs tiges d'écartement 30 s'étendant parallélement à l'axe du premier tube de commande 2 entre la périphérie de la bride 29 solidaire dudit premier tube 2, et celle du piston-doseur 28 qui comporte un passage central 31 obturable par le clapet 32a d'une soupape d'admission 32. Le piston-doseur 28 comporte sur son pourtour un joint annulaire d'étanchéité 33. Les tiges d'écartement 30 sont fixées, d'une part, à la périphérie de la bride circulaire 29 et, d'autre part, sur le piston-doseur 28 entre le joint d'étanchéité 33 et le passage central 31 de ce dernier.

Le premier tube de commande 2 traverse la paroi supérieure 3a de l'enceinte 3 et y est guidé axialement lors de ses mouvements alternativement ascendant et descendant commandés par un vérin pneumatique à double effet 34. L'extrémité supérieure du premier tube de commande 2 est donc fixée à la tige de piston 34a du vérin pneumatique 34 dont le cylindre 34b est installé à poste fixe sur le bâti de support 100. La liaison entre l'extrémité inférieure de la tige 34a du piston 34c du vérin 34 et l'extrémité supérieure du premier tube de commande 2 est réalisée par tout moyen approprié tel qu'une bride de raccordement 134 fixée d'une part, à la tige 34a du piston 34c et, d'autre part, à l'extrémité supérieure du premier tube de commande 2. L'extrémité inférieure du premier tube de commande 2 est obturée de façon étanche vis-à-vis de l'intérieur de l'enceinte 3. Le premier tube de commande 2 est entouré, sur son tronçon 2a pénétrant dans l'enceinte 3, d'un premier soufflet 6 dont l'extrémité supérieure est fixée de façon étanche sur la paroi d'enceinte 3a traversée par ledit premier tube 2, et dont l'extrémité inférieure est fixée de façon étanche sur la partie extrême inférieure dudit premier tube 2. Chaque pli annulaire du soufflet 6 est associé à une rondelle de rigidification à l'intérieur dudit soufflet 6, ces rondelles 8 étant susceptibles de coulisser le long du premier tube 2, et l'espace annulaire entre le premier soufflet 6 et le premier tube de commande 2 étant raccordé en permanence à l'atmosphère extérieure.

Le clapet 32a de la soupape d'admission 32 est disposé, par rapport au piston-doseur 28, du côté de la chambre d'alimentation 25, tout au moins lorsque ledit piston-doseur 28 occupe sa position haute au voisinage du rétreint tronconique 27, le bord supérieur du passage central 31 ménagé dans le piston-doseur 28 constituant le siège de soupape 32b de ladite soupape d'admission 32. Le passage central 31 du piston-doseur 28 présente une forme troncônique qui s'élargit à partir de la chambre d'alimentation 25 vers la chambre de dosage 26. Le clapet d'admission 32a de la soupape d'admission 32 est disposé dans l'enceinte 3 entre l'extrémité inférieure du premier tube de commande 2 au voisinage de celui-ci, et le passage central 31 du piston-doseur 28 qui est écarté d'une distance déterminée de l'extrémité inférieure dudit premier tube 2 tout en étant fixé sur celui-ci. Grâce à cette disposition, le clapet d'admission 32a peut effectuer ses mouvements d'ouverture et de fermeture entre la face supérieure du piston-doseur 28 et l'extrémité inférieure du premier tube de commande 2. En outre, ce clapet d'admission 32a est porté par l'extrémité inférieure fermée d'un deuxième tube de commande 35 guidé dans le premier tube de commande 2 et dépassant de l'extrémité inférieure de celui-ci en dessous de la bride circulaire ou tronconique 29. A son extrémité supérieure, le deuxième tube de commande 35 porte un piston 36a d'un deuxième vérin de commande 36 incorporé au premier tube de commande 2. Ce piston 36a coulisse de façon étanche dans la partie extrême supérieure du premier tube de commande 2 et sépare l'intérieur de ladite partie extrême supérieure en une chambre supérieure 2c et une chambre inférieure 2d qui, à son extrémité inférieure, est délimitée par une cloison annulaire transversale 37 solidaire du premier tube de commande 2 et guidant de façon étanche la partie extrême supérieure du deuxième tube de commande 35. La chambre supérieure 2c peut être raccordée à travers un alésage latéral 2e et une valve de commande non représentée soit à l'atmosphère, soit à une source d'air comprimé. La chambre inférieure 2d est raccordée en permanence à l'atmosphère à travers au moins un orifice transversal du tube 2, et comprend un ressort de rappel 18 entourant la partie supérieure du deuxième tube de commande 35, et prenant appui, d'une part, sur le piston de commande 36a et, d'autre part, sur la cloison 37. Dans ce cas, le ressort de rappel 18 agit par l'intermédiaire du piston 36a et du deuxième tube 35 dans le sens de l'ouverture de la soupape d'admission 32 et toujours à l'encontre de la pression qui peut s'établir dans la chambre supérieure 2c et qui provoque et assure la fermeture de ladite soupape 32. Cette disposition est particulièrement avantageuse lorsque l'on désire obtenir une fermeture rapide, quasiment instantanée de la soupape d'admission 32. La partie extrême inférieure 35a du deuxième tube de commande 35, partie extrême 35a dépassant de l'extrémité inférieure du premier tube de commande 2, est entourée par un deuxième soufflet 38 dont la structure est identique ou similaire à celle du soufflet 6 précédent et dont chaque pli annulaire comporte également une rondelle de rigidification 8 susceptible de coulisser le long du deuxième tube de commande 35. L'extrémité supérieure du deuxième soufflet 38 est fixée de façon étanche sur l'extrémité inférieure du premier tube de commande 2 ou un élément solidaire de celui-ci en dessous de la bride 29 et du premier soufflet 6, et l'extrémité inférieure dudit deuxième soufflet 38 est fixée de façon étanche soit sur l'extrémité inférieure dudit deuxième tube de commande 38, soit sur le clapet d'admission 32a solidaire dudit deuxième tube 35. De cette façon, l'extrémité inférieure du premier tube de commande 2 est obturée de façon étanche par rapport à l'intérieur de l'enceinte 3. L'espace annulaire entre la partie extrême inférieure 35a du deuxième tube de commande 35 et le deuxième soufflet 38 est relié en permanence à l'atmosphère extérieure, par exemple à l'aide de plusieurs passages ménagés sous forme de fentes courtes ou d'orifices circulaires 35b dans la partie extrême inférieure 35a du deuxième tube 35 et dans le tronçon de tube 35c restant à l'intérieur de l'espace 2g du premier tube 2 en dessous de la cloison annulaire transversale 37, cet espace 2g étant relié à l'atmosphère à travers un ou plusieurs orifices 2b ménagés dans la paroi du premier tube 2 juste en dessous de ladite cloison 37. En outre, la chambre inférieure 2d communique à travers un orifice latéral 2e du premier tube de commande 2 avec l'atmosphère extérieure. Comme mentionné précédemment, la chambre supérieure 2d de la partie extrême supérieure du premier tube de commande 2 peut être reliée alternativement à une source d'air comprimé ou à l'atmosphère extérieure à travers un orifice de raccordement prévu dans la paroi dudit tube 2 à l'extrémité supérieure de ce dernier.

Grâce aux particularités qui viennent d'être décrites, les mouvements alternatifs du piston-doseur 28 s'effectuent sans produire des dépressions ou surpressions notables dans la chambre de dosage 26, le clapet d'admission 32a agissant automatiquement en tant que clapet d'échappement si pour une raison ou une autre la pression de refoulement appliquée à la quantité dosée du produit par le piston-doseur 28 dépasse une valeur prédéterminée. En outre, comme la fermeture de la soupape d'admission est effectuée au moyen du deuxième tube de commande 35 en fin de course ascendante ou d'aspiration et avant le début de la course descendante ou de refoulement, le dosage du produit est fait avec une très grande précision. Par ailleurs, l'alimentation du produit sous une certaine pression assure le remplissage complet de la chambre de dosage 26 avec le produit sans apparition d'une dépression notable lors de la course ascendante du piston-doseur 28 à la soupape d'admission ouverte 32.

La deuxième enceinte 24 délimite une chambre de distribution 24b reliée à l'ouverture de sortie 23 de la chambre de dosage 26 et contient une soupape d'éjection 40 dont l'organe d'obturation 40a tel qu'un clapet est porté par l'extrémité fermée inférieure d'un troisième tube de commande 42 qui est de structure similaire à celle du premier tube de commande 2. Le tronçon 42a du troisième tube de commande 42, tronçon 42a pénétrant dans la chambre de distribution 24b de la deuxième enceinte 24, est entouré d'un troisième soufflet 43 dont une extrémité 43a est fixée sur la paroi d'enceinte supérieure 24a traversée par le troisième tube de commande 42 et dont l'autre extrémité 43b est fixée de façon étanche sur l'organe d'obturation 40a ou sur le troisième tube 42 plus ou moins près de l'organe d'obturation 40a en fonction de la course d'ouverture de ce dernier et de la longueur du tronçon du troisième tube 42. Là encore, chaque pli de soufflet est associé à une rondelle de rigidification 8 disposée à l'intérieur du troisième soufflet 43 et entourant ledit troisième tube 42 de façon à pouvoir coulisser le long de celui-ci pendant les mouvements d'extension ou de compression dudit soufflet 43. L'espace annulaire 44 entre le troisième tube 42 et le soufflet 43 est relié en permanence à l'atmosphère extérieure de la manière précédemment décrite.

L'extrémité du troisième tube de commande 42, extrémité opposée à la soupape d'éjection 40 et située toujours à l'extérieur de la chambre de distribution 24b porte le piston de commande 45a d'un vérin à simple effet 45 dont le ressort de rappel 45b agit sur ledit piston 45a et ainsi sur le troisième tube de commande 42 dans le sens, soit de la fermeture de la soupape d'éjection 40 (exemple représenté sur le dessin), soit dans le sens de l'ouverture de celle-ci (exemple non représenté). Le piston 45a sépare le volume du vérin 45 en deux chambres 45c et 45d dont celle contenant le ressort 45b est raccordée en permanence à l'atmosphère et dont l'autre est susceptible d'être raccordée alternativement soit à l'atmosphère extérieure, soit à une source d'air comprimé non représentée. Il est à noter que le ressort de rappel 45b, au lieu d'être disposé dans la chambre supérieure 45c du vérin 45 tel que représenté sur la figure unique pourrait aussi être disposé dans la chambre inférieure 45d, ou plus généralement dit dans la chambre traversée par le troisième tube de commande 42 et pourrait entourer ce dernier. Comme dans ce cas, la chambre contenant le ressort 45b est à l'atmosphère, l'espace annulaire 44 entre ce tube 42 et le troisième soufflet 43 peut directement communiquer avec ladite chambre. Dans ce cas, la fermeture rapide de la soupape 40 sera commandée par la pression d'air comprimé s'établissant dans l'autre chambre (ici chambre supérieure 45c) à l'encontre de la pression du ressort 45b.

Le siège 40b de la soupape d'éjection 40 est constitué, dans l'exemple représenté, par l'extrémité supérieure d'une ou de plusieurs tubulures fixes d'éjection 46 débouchant dans la chambre de distribution 24b, le clapet 40a de ladite soupape 40 s'ouvrant en direction opposée à la direction d'écoulement du produit à travers la ou les tubulures d'éjection 46. La partie de distribution 20b du doseur-distributeur 20 est raccordée par une conduite de liaison 47 à la sortie 23 de la chambre de dosage 26 de la partie de dosage 20a dudit doseur-distributeur 20. Les tubulures d'éjection 46 se trouvent au-dessus du trajet de préférence horizontal des récipients 101 qui ont été préalablement réalisés d'une façon connue par thermoformage d'une bande thermoplastique et dont chacun doit être rempli d'une quantité dosée d'un produit 102 à l'aide des tubulures d'éjection 46 du doseur-distributeur 20.

Au moins chaque énième récipient 102 ou n-ième groupe de plusieurs récipients, par exemple de 2, 3, 4, 6 ou 8 récipients, est pesé après avoir été rempli avec la quantité dosée de produit 102. Le nombre entier n est avantageusement choisi parmi les nombres allant de 1 à 1000. On utilise des moyens de pesée 103 qui pour plus de commodité de représentation ont été indiqués sur le dessin au voisinage des tubulures d'éjection, mais qui, en réalité, sont prévus à la sortie du poste de découpe à l'aide duquel les récipients thermoformés dans une bande thermoplastique, remplis d'un produit et obturés par une bande à couvercles scellés sur la bande thermoplastique autour de leurs ouvertures dans une installation de conditionnement, sont découpés de la bande thermoplastique et de la bande à couvercles, soit individuellement, soit par groupe de plusieurs récipients. En effet, on pèse le (ou les) récipient(s) rempli(s) et obturé(s), de préférence une fois découpé(s), de la bande thermoplastique à récipients et de la bande à couvercles. A cet effet les moyens de pesée 103 comprennent un support 104 tel qu'un plateau sur lequel repose le fond d'au moins un récipient rempli 101 ou tel que des rails de guidage sur lesquels repose le bord d'au moins un récipient rempli 101. Ce support 104 est monté à l'extrémité de l'un (105) des bras 105, 106 d'un double levier 107 porté dans sa partie centrale par un palier de pivotement 108. L'autre bras 106 du double levier 107 comporte deux branches 106a, 106b dont l'une 106a est alignée avec le premier bras 105 et porte un curseur 109 qui permet d'étalonner les moyens de pesée 103 à une valeur-étalon prédéterminée à laquelle doit correspondre le poids du produit dosé 102 contenu dans le récipient 101 soumis à la pesée. L'autre branche 106b du deuxième bras 106 du double levier 107 comporte à son extrémité libre un contact frotteur 110 appliqué en permanence contre une borne centrale 111 et susceptible de venir s'appliquer contre l'une (112) ou l'autre (113) de deux autres bornes 112, 113 suivant le sens de basculement du double levier 107 du récipient pesé 102 et du poids étalon prédéterminé la position du curseur 109 sur la branche 106a du double levier 107, ces deux autres bornes 112, 113 étant situées de part et d'autre et à égale distance de la borne centrale 111 ainsi qu'à proximité et à égale distance de l'une ou l'autre extrémité correspondante du contact frotteur courbe 110 lorsque celui-ci occupe la position médiane correspondant à un écart zéro entre le poids mesuré et le poids étalon. Bien entendu, le double levier 107 comprend un mécanisme de blocage, non représenté, qui permet aux moyens de pesée 103 d'occuper une position neutre pendant des périodes sans pesée. En outre, le contact frotteur 110 est isolé électriquement du double levier 107.

Chacune des bornes 111, 112, 113 est reliée à une borne correspondante 114, 115, 116 d'un moteur pas à pas 117 à deux sens de rotation pas à pas. Les bornes 111, 112, 114, 115 font partie d'un premier circuit d'alimentation qui, lorsqu'il est fermé par le contact frotteur 110, provoque la rotation pas à pas du moteur 117 dans un premier sens, par exemple dans le sens des aiguilles d'une montre, et les bornes 111, 113, 114, 116 font partie d'un deuxième circuit d'alimentation qui, lorsqu'il est fermé, provoque la rotation du moteur pas à pas 117 dans un deuxième sens contraire audit premier sens de rotation. Bien entendu, les moyens de pesée 103 et le mode de commande du moteur pas à pas 117 peuvent être remplacés par des moyens équivalents pourvu qu'ils aboutissent aux mêmes résultats ou à des résultats similaires. Ainsi, le curseur d'étalonnage 109 coopérant avec la branche 106a du double levier 107 des moyens de pesée 103 peut être remplacé par un autre mécanisme d'étalonnage, et la branche 106b du double levier 107 et le contact frotteur 110 porté par la branche 106b et coopérant en permanence avec la borne centrale 111, et lors d'un écart de poids, aussi avec l'une ou l'autre des deux autres bornes voisines 112, 113 peuvent être remplacés par une unité de comparaison, de même que l'on peut substituer aux circuits de commande du moteur pas à pas 117 comprenant les bornes 111 à 116 toute autre unité appropriée de commande pour ledit moteur 117.

Ce moteur pas à pas 117 est monté sur l'extrémité supérieure du premier vérin de commande 34, par exemple par l'intermédiaire d'un bloc de guidage 118 fixé sur l'enveloppe cylindrique 34b dudit vérin 34 et coaxialement à ce dernier de façon à constituer la paroi transversale supérieure dudit vérin 34. Ce bloc de guidage 118 comprend un canal de passage 118a par l'intermédiaire duquel la chambre supérieure du vérin 34 peut être reliée soit à une source d'air comprimé, soit à l'atmosphère. Un perçage coaxial 118b traverse le bloc de guidage 118 de part en part et reçoit dans sa partie inférieure une butée de fin de course ascendante 119 qui est guidée axialement dans ledit perçage 118b, est réglable le long de l'axe du vérin 34, pénètre plus ou moins profondément dans la chambre supérieure du vérin 34 et détermine la position haute du piston 34c du vérin 34 et celle du piston-doseur 28. La butée réglable de fin de course 119 est commandée, en ce qui concerne son déplacement axial, par une transmission à broche et à écrou 120 dont l'écrou 120a est solidaire de la butée réglable 119 et est guidé axialement dans le perçage 118b et dont la broche filetée 120b coopère avec la taraudage de l'écrou 120a et, à son extrémité supérieure, est solidaire de l'arbre de sortie 117a du moteur pas à pas 117 dont le boîtier 117b est monté sur l'extrémité supérieure du bloc de guidage 118.

La deuxième butée de fin de course 121 qui limite la course descendante du piston-doseur 28 est par exemple à position fixe, présente une forme annulaire et est prévue dans la chambre inférieure et sur la paroi de fond du premier vérin de commande 34. Le fond de ce verin de commande 34 est avantageusement constitué par la face supérieure d'un disque intermédiaire annulaire de distribution 122 traversé de façon étanche par la tige 34a dudit vérin 34 et fixé sur l'extrémité inférieure de cylindre 34b de ce dernier. Ce disque de distribution 122 comprend deux canaux de passage 122a, 122b dont le canal supérieur 122a débouche dans la chambre inférieure du vérin pneumatique à double effet 34 et assure la liaison de cette chambre inférieure avec soit l'atmosphère, soit une source d'air comprimé. La face inférieure du disque de distribution 122 délimite l'extrémité supérieure d'un amortisseur à liquide 123 monté à son extrémité inférieure. Sur un disque inférieur de distribution 124 qui est également traversé coaxialement et de façon étanche par la tige 34a du premier vérin de commande 34. Dans l'enceinte cylindrique de l'amortisseur à liquide 123 coulisse de façon étanche un patin ou piston amortisseur 123a fixé sur la tige 34a du vérin 34 de façon à pouvoir accompagner le piston-doseur 28 dans ses courses ascendantes et descendantes, tout en s'opposant aux mouvements brusques provoqués alternativement par la pression pneumatique dans l'une et l'autre chambre du premier vérin de commande 34. Le patin amortisseur 123a sépare l'enceinte cylindrique de l'amortisseur 123 en une chambre supérieure et une chambre inférieure. Dans la chambre supérieure 123b de l'amortisseur 123 débouche le canal de passage inférieur 122b du disque intermédiaire de distribution 122 et dans la chambre inférieure 123c dudit amortisseur 123 débouche un canal de passage 124a ménagé dans le disque inférieur de distribution 124, les deux chambres 123b, 123c de l'amortisseur 123 étant en permanence complètement remplies d'un liquide. Les deux canaux de passage 122b et 124a débouche dans les chambres 123b, 123c situées de part et d'autre du patin amortisseur 123a dans l'enceinte de l'amortisseur 123, chambres 123b, 123c qui sont raccordées d'une part entre elles à l'aide d'un conduit de liaison 123d muni d'un régulateur de débit 123e et, d'autre part, à un réservoir de liquide contenant un liquide tel que de l'huile et dont la sortie est généralement obturée par une soupape appropriée. L'amortisseur 123 et le régulateur de débit 123e permettent d'obtenir pour chaque type de produit une très grande régularité des mouvements ascendants et descendants du piston-doseur 28.

Il est en outre avantageux que le tronçon 26 du premier tube de commande 2, tronçon 2b se déplaçant à l'extérieur de l'enceinte 3 ou le tronçon inférieure de la tige 34a du premier vérin de commande 34, se déplaçant en dehors de ce dernier et de l'amortisseur 123, ou la bride de raccordement 134 entre l'extrémité inférieure de ladite tige 34a et l'extrémité supérieure du premier tube de commande 2 soit muni d'un taquet suiveur 125 s'étendant latéralement vers l'extérieur, c'est-à-dire perpendiculairement à l'axe du tube 2 et de la tige 34a coaxial audit tube 2 et que ce taquet suiveur 125 soit associé à au moins un premier détecteur 126 et, le cas échéant, aussi à un deuxième détecteur 127, ces deux détecteurs 126 et 127 étant par exemple des détecteurs de proximité ou une cellule photoélectrique. L'emplacement du premier détecteur 126 est choisi par rapport au taquet suiveur 125 de telle sorte que, lorsque ce dernier est aligné avec ledit premier détecteur 126, le piston-doseur 28 occupe sa position de fin de course descendante tandis que l'emplacement du deuxième détecteur 127, lorsqu'il est utilisé, est choisi par rapport au taquet suiveur 125 de façon telle que ce dernier soit aligné avec le deuxième détecteur 127 lorsque le piston-doseur 28 occupe sa position de fin de course ascendante. Le premier détecteur 126 est conçu et agencé de telle sorte qu'en détectant en face de lui la présence du taquet suiveur 125, il commande simultanément la fermeture du clapet 40a de la soupape d'éjection 40 et l'ouverture du clapet 32a de la soupape d'admission 32 ainsi que le déclenchement de la course ascendante du piston-doseur 28, c'est-à-dire de la course d'aspiration de ce dernier. Le deuxième détecteur 127 est par contre conçu et agencé de telle façon qu'en détectant en face de lui la présence du taquet suiveur 125, il commande simultanément l'ouverture du clapet 40a de la soupape d'éjection 40 et la fermeture du clapet 32a de la soupape d'admission 32 ainsi que le déclenchement de la course descendante du piston-doseur 28, c'est-à-dire la course de refoulement du produit dosé vers un récipient 101.

Au moins l'une des deux détecteurs 126, 127 peut être du type à position réglable au moins parallèlement à l'axe vertical du premier tube de commande 2. Dans ce cas, le détecteur 126 ou 127 est avantageusement porté par une transmission à broche et à écrou 128 dont l'écrou 128a est solidaire du détecteur 126 ou 127 et est guidé axialement de façon à rester immobile en rotation, et dont la broche filetée 128b coopère avec le taraudage de l'écrou 128a et est clavetée sur l'arbre de sortie 129a d'un moteur pas à pas 129 dont le boîtier 129b est fixé sur le bâti 100 du doseur-distributeur.

Il s'est avéré que l'on peut régler aussi à l'aide d'au moins l'un de ces deux détecteurs 126, 127 la longueur des courses du piston-doseur 28 et ainsi corriger à distance le poids des doses de produit distribuées dans les récipients 101. D'une façon générale, on ne règlera la longueur de la course du piston-doseur 28 qu'à l'une des extrémités de course, l'autre extrémité étant considérée comme une extrémité fixe, mais lorsqu'apparaît soudainement un écart important entre le poids mesuré d'une dose de produit et le poids étalon prédéterminé, on peut procéder au réglage de la longueur de la course du piston-doseur 28 en agissant sur les deux extrémités de course, c'est-à-dire sur les deux détecteurs ou sur un détecteur tel que 126 et la butée réglable 119.

Dans certains cas, il peut donc être avantageux qu'au moins l'un des moteurs pas à pas 129 associé à l'un des détecteurs à positions réglables 126, 127 soit susceptible d'être commandé en fonction de l'écart entre le poids mesuré d'un récipient rempli 101 et le poids étalon prédéterminé, comme c'est le cas du moteur pas à pas 117 associé à la butée de fin de course 119.

Le procédé de réglage de la quantité dosée du produit 102 distribuée après dosage dans un récipient 101 se comprend aisément à partir de la description précédente du dispositif de réglage. Il est à noter que le réglage de la longueur d'une course du piston-doseur 28 s'effectue de préférence du côté de l'extrémité supérieure de cette course et que, si ce réglage s'effectue à distance sans interruption du fonctionnement du doseur-distributeur 20 et à l'endroit même dudit doseur-distributeur, la pesée des récipients remplis et scellés peut s'effectuer en dehors du trajet normal de ces récipients le long d'une installation de conditionnement. Il est toutefois avantageux de procéder à la pesée des récipients remplis et à la comparaison du poids de ces derniers avec le poids étalon sur le trajet même de ces récipients encore à l'intérieur de l'installation de conditionnement lorsque les pesées sont très fréquentes ou concernent chaque récipient passant sous un doseur-distributeur 20. Pour ramener à zéro l'écart existant entre le poids mesuré d'un récipient ou d'un groupe de récipients et le poids étalon correspondant, on pourrait agir manuellement sur le moteur pas à pas de la butée à position réglable ou d'un détecteur à position réglable, mais il est préférable que la commande dudit moteur pas à pas s'effectue automatiquement à partir des moyens de pesée et de l'unité à circuits de commande associés à ce moteur.

Au lieu de régler la longueur de course du piston-doseur 28 à l'aide d'une butée réglable supérieure, on peut aussi régler ladite course à l'aide d'une butée réglable inférieure. Dans ce cas, la butée supérieure est fixe et la butée inférieure est réglable par l'intermédiaire d'un moteur pas à pas.

L'emploi en tant que butée réglable du détecteur de fin de course descendante 126 est particulièrement avantageuse lorsqu'il s'agit de doser simultanément la quantité de produit destinée à un groupe de récipients et distribuée simultanément par l'ensemble des doseurs associés respectivement à chacun des récipients de ce groupe de récipients. Dans ce cas, un seul détecteur de fin de course peut être utilisé pour déterminer la position inférieure de tous les pistons du groupe de doseurs associé à un groupe de récipients dont le poids de produit est alors déterminé globalement pour un groupe de récipients.

Bien entendu, les différents modes de réalisation précédemment décrits peuvent subir un certain nombre de modifications sans que l'on sorte pour cela du cadre de l'invention, cadre défini par les revendications annexées.

## Revendications

1. Procédé de réglage des quantités de produit dosées et distribuées par un doseur-distributeur (20), qui est incorporé dans une installation de conditionnement du produit dosé dans des récipients réalisés par thermoformage à partir d'une bande thermoplastique et qui est juxtaposé à d'autres doseurs-distributeurs d'une rangée de doseurs-distributeurs s'étendant au-dessus de la bande thermoplastique et transversalement par rapport au sens de défilement de ladite bande contenant des rangées transversales successives de récipients parallèles à celle des doseurs-distributeurs et avançant pas à pas avec ladite bande dans le sens de défilement de celle-ci, le produit alimentaire ou pharmaceutique se trouvant de préférence dans un état liquide et/ou pâteux et le doseur-distributeur (20) étant du type comportant dans une première enceinte cylindrique (3), d'une part, une chambre supérieure d'alimentation (25) raccordée par une conduite d'alimentation (22) à un premier réservoir de stockage de produit et, d'autre part, une chambre inférieure de dosage (26), un piston-doseur (28) qui coulisse de façon étanche dans ladite première enceinte (3) et y sépare ladite chambre d'alimentation (25) de ladite chambre de dosage (26) et qui comprend un passage central (31) constituant le siège (32b) pour un clapet (32a) d'une soupape d'admission (32) ouvrant en direction de la chambre d'alimentation (25), un premier tube de commande (2) pénétrant de façon étanche dans ladite première enceinte (3) dans laquelle il est fixé au piston-doseur (28) et à l'extérieur de laquelle il est fixé au piston (34c) d'un premier vérin de commande (34) dont le cylindre (34b) est monté sur un support ou bâti (100) de ladite première enceinte (3), ce doseur-distributeur (20) comportant, en outre, un deuxième tube de commande (35) dont la partie extrême inférieure (35a) pénètre de façon étanche dans ladite première enceinte (3), est guidée dans ledit premier tube de commande (2) et est solidaire, à son extrémité supérieure, d'un piston (36a) d'un deuxième vérin de commande (36) incorporé dans ledit premier tube de commande (2), ainsi qu'une chambre de distribution (24b) raccordée, d'une part, à la sortie (23) de la chambre de dosage (26) et, d'autre part, à au moins une tubulure d'éjection (46) obturable par le clapet (40a) d'une soupape d'éjection (40), caractérisé en ce que l'on mesure le poids d'au moins chaque énième des récipients (101) remplis par un même doseur-distributeur (20) avec une quantité dosée du produit (102), le nombre entier n étant compris entre 1 et 1000, on compare chaque valeur de poids mesurée à une valeur étalon prédéterminée et on règle pas à pas et pendant le fonctionnement du doseur-distributeur (20) et de l'installation au moins l'une des positions extrêmes de course du piston-doseur (28) dudit doseur-distributeur (20) dans le sens d'une augmentation ou de diminution de la course du piston-doseur (28) dès que l'écart entre le poids réel mesuré et le poids étalon prédéterminé dépasse une valeur limite, et on continue ce réglage jusqu'à la disparition dudit écart.

2. Procédé de réglage selon la revendication 1, caractérisé en ce que l'on mesure simultanément et périodiquement le poids d'un groupe de plusieurs récipients (101) remplis du produit, on compare le poids mesuré à une valeur étalon prédéterminée pour ce groupe de récipients (101) et on règle pas à pas pendant le fonctionnement du doseur-distributeur (20) la course du piston-doseur (28) jusqu'à ce que le poids mesuré corresponde au poids étalon prédéterminé pour les groupes de récipients (101).

3. Procédé de réglage selon la revendication 1 ou 2, caractérisé en ce que l'on règle le poids de la quantité de produit (102) dosée et distribuée dans un récipient (101), d'une part, en réglant la position extrême haute du piston-doseur (28), position correspondant à la fin de course ascendante de celui-ci, à l'aide d'une butée réglable (119) entraînée par un moteur pas à pas (117) et susceptible de servir de butée de fin de course ascendante pour le piston-doseur (28) solidaire du piston (34) du premier vérin de commande (34) par l'intermédiaire du premier tube de commande (2), et, d'autre part, en associant à la position extrême basse correspondant à la fin de course descendante du piston-doseur (28), une butée de fin de course fixe (121) également susceptible de coopérer avec soit le piston (34b) du premier vérin de commande (34), soit un organe (125) solidaire d'un tronçon (2b) du premier tube de commande (2), tronçon (2b) situé en permanence hors de l'enceinte (3) et du premier vérin de commande (34).

4. Procédé de réglage selon la revendication 1 ou 2, caractérisé en ce que l'on règle le poids de la quantité dosée et distribuée dans un récipient (101), d'une part, en réglant la position extrême basse correspondant à la fin de course descendante du piston-doseur (28) à l'aide d'une butée réglable entraînée par un moteur pas à pas et susceptible de coopérer avec le piston (34c) du premier vérin de commande (34) ou avec un organe (125) solidaire dudit piston (34c) et de servir de butée de fin de course descendante dudit piston-doseur (28) solidaire du piston du premier vérin de commande par l'intermédiaire du premier tube de commande (2) et de la tige (34a) et, d'autre part, en associant à la position extrême haute correspondant de la fin de course ascendante du piston-doseur (28), une butée de fin de course fixe également susceptible de coopérer avec ledit piston (34c) du premier vérin de commande (34), soit avec un organe (125) solidaire du premier tube de commande (2) ou de la tige (34c) du premier vérin de commande (34).

5. Procédé de réglage selon l'une des revendications 1 à 4, caractérisé en ce que l'on utilise comme butée de fin de course descendante du piston-doseur (28) un détecteur de fin de course (126) qui déclenche simultanément la fermeture du clapet (40a) de la soupape d'éjection (40) et l'ouverture du clapet (32a) de la soupape d'admission (32) et la course ascendante du piston-doseur (28).

6. Procédé de réglage selon l'une des revendications 1 à 4, caractérisé en ce que l'on associe à la butée de fin de course descendante (121) du piston-doseur (28), un détecteur de fin de course (126) qui déclenche simultanément la fermeture du clapet (40a) de la soupape d'éjection (40) et l'ouverture du clapet (32a) de la soupape d'admission (32) ainsi que la course ascendante du piston-doseur (28).

7. Dispositif de réglage des quantités de produit dosées et distribuées par un doseur-distributeur (20), le produit alimentaire ou pharmaceutique (102) se trouvant de préférence dans un état liquide et/ou pâteux, et le doseur-distributeur (20) étant de préférence du type comportant dans une première enceinte cylindrique (3), d'une part, une chambre supérieure d'alimentation (25) raccordée par une conduite d'alimentation (22) à un premier réservoir de stockage du produit (102) et, d'autre part, une chambre inférieure de dosage (26), un piston-doseur (28) qui coulisse de façon étanche dans ladite première enceinte (3) et y sépare ladite chambre d'alimentation (25) de ladite chambre de dosage (26) et qui comprend un passage central (31) constituant le siège (32b) pour un clapet (32a) d'une soupape d'admission (32) ouvrant en direction de la chambre d'alimentation (25), un premier tube de commande (2) pénétrant de façon étanche dans ladite première enceinte (3) dans laquelle il est fixé au piston-doseur (28) et à l'extérieur de laquelle il est fixé au piston (34c) d'un premier vérin de commande (34) dont le cylindre (34b) est monté sur un support ou bâti (100) de ladite première enceinte (3), ce doseur-distributeur (20) comportant, en outre, un deuxième tube de commande (35) dont la partie extrême inférieure (35a) pénètre de façon étanche dans ladite première enceinte (3), est guidée dans ledit premier tube de commande (2) et est solidaire, à son extrémité supérieure, d'un piston (36a) d'un deuxième vérin de commande (36) incorporé dans ledit premier tube de commande (2), ainsi qu'une chambre de distribution (24b) raccordée, d'une part, à la sortie (23) de la chambre de dosage (26) et, d'autre part, à au moins une tubulure d'éjection (46) obturable par le clapet (40a) d'une soupape d'éjection (40),
caractérisé en ce que le piston-doseur (28) ou l'un des organes (2, 34a, 34c, 125) se déplaçant avec lui lors de ses courses ascendantes et descendantes, courses correspondant respectivement à l'admission d'une quantité déterminée de produit (102) dans la chambre de dosage (26) et au refoulement de cette quantité hors de ladite chambre de dosage (26) vers la tubulure d'éjection (46), est associé à deux butées de fin de course (119, 121, 126, 127) dont chacune détermine l'une des deux extrémités de la course du piston-doseur (28) et dont au moins l'une (par exemple 119) est du type à position réglable pendant le fonctionnement du doseur-distributeur (20) et en fonction de l'écart existant entre le poids mesuré d'une quantité de produit dosée et distribuée (102), et un poids étalon prédéterminé.

8. Dispositif de réglage selon la revendication 7, caractérisé en ce que la butée de fin de course à position réglable (119) penètre partiellement dans la chambre supérieure du premier vérin de commande (34) et est susceptible de limiter la course ascendante du piston (34c) dudit vérin (34) et du piston-doseur (28), et qu'il comprend, en outre, un moteur pas à pas (117) dont l'arbre de sortie (117a) à deux sens de rotation est relié par l'intermédiaire d'une transmission à broche et à écrou (120) à la butée réglable (119) et dont le boîtier (117b) est fixé sur le bâti (100) du doseur-distributeur (20) ou d'un organe solidaire de ce dernier, la rotation et le sens de rotation de l'arbre de sortie (117a) dudit moteur pas à pas (117) étant commandés en fonction de l'écart positif ou négatif entre le poids mesuré d'une quantité de produit (102) dosée et distribuée dans un récipient (101), et un poids étalon prédéterminé.

9. Dispositif de réglage selon l'une des revendications 7 et 8, caractérisé en ce qu'il comporte, en outre, des moyens de pesée (103) pour au moins un récipient rempli ou un groupe de récipients remplis (101), un mécanisme d'étalonnage (106a, 107, 109), une unité de comparaison (106b, 110) entre le poids mesuré par les moyens de pesée (103) et le poids étalon prédéterminé par le mécanisme d'étalonnage (106a, 107, 109), et une unité à circuits de commande (110 à 116) susceptible d'agir sur le moteur pas à pas (117) de la butée réglable (119) en fonction des signaux issus de l'unité de comparaison (110), dans le sens d'une réduction de l'écart existant entre le poids mesuré d'un récipient rempli (101) ou d'un groupe de récipients et le poids étalon prédéterminé.

10. Dispositif de réglage selon l'une des revendications 7 à 9, caractérisé en ce que la butée réglable (119) est axialement guidée dans un bloc de guidage (118) monté sur l'extrémité supérieure dudit premier vérin (34), est susceptible de coopérer avec le piston (34c) de ce dernier en limitant la course ascendante dudit piston (34c) et est solidaire de l'écrou (120a) de la transmission à broche et à écrou (120) dont l'écrou (120a) est guidé axialement et de façon immobile en rotation dans le perçage axial (118b) du bloc de guidage (118) et dont la broche (120b) est solidaire de l'arbre de sortie (117a) du moteur pas à pas (117), le boîtier (117b) de celui-ci étant monté sur l'extrémité supérieure du premier vérin de commande (34).

11. Dispositif de réglage selon l'une des revendications 7 à 10, caractérisé en ce que la deuxième butée de fin de course (121) limitant la course descendante du piston-doseur (28) est fixe, est prévu au fond du premier vérin de commande (34) près de l'extrémité inférieure de celui-ci et coopère avec le piston (34c) dudit premier vérin (34).

12. Dispositif de réglage selon l'une des revendications 7 à 11, caractérisé en ce que la position est le tronçon (2b) du premier tube de commande (2) se déplaçant à l'extérieur de l'enceinte (3), ou le tronçon de la tige (34a) se déplaçant en dehors du premier vérin de commande (34) et de l'amortisseur (123) ou la bride de raccordement (134) entre l'extrémité inférieure de ladite tige (34a) et l'extrémité supérieure du premier tube de commande (2), est muni d'un taquet suiveur latéral (125) associé à un premier détecteur (126) dont la position correspond à la position de fin de course descendante du piston-doseur (28) et qui en détectant la présence dudit taquet suiveur (125) commande simultanément la fermeture du clapet (40a) de la soupape d'éjection (40) et l'ouverture du clapet (32a) de la soupape d'admission (32) ainsi que le déclenchement de la course ascendante du piston-doseur (28).

13. Dispositif de réglage selon l'une des revendications 7 à 11, caractérisé en ce que le tronçon (2b) du premier tube de commande (2) se déplaçant à l'extérieur de l'enceinte (3), ou le tronçon de la tige (34a) se déplaçant en dehors du premier vérin de commande (34) et de l'amortisseur (123) ou la bride de raccordement (134) entre l'extrémité inférieure de ladite tige t l'extrémité supérieure du premier tube de commande (2),
est muni d'un taquet suiveur latéral (125) associé à un deuxième détecteur (127) dont la position correspond à la position de fin de course ascendante du piston-doseur (28) et qui en détectant la présence dudit taquet suiveur (125) commande simultanément l'ouverture du clapet (40a) de la soupape d'éjection (40) et la fermeture du clapet (32a) de la soupape d'admission (32) ainsi que le déclenchement de la course descendante du piston-doseur (28).

14. Dispositif de réglage selon l'une des revendications 12 et 13, caractérisé en ce que le détecteur (126 ou 127) est du type à position réglable, est monté par une transmission à broche et à écrou (128) dont l'écrou (128a) est solidaire du détecteur (126 ou 127) et guidé axialement de façon immobile en rotation et dont la broche (128b) est clavetée sur l'arbre de sortie (129a) d'un moteur pas à pas (129) dont le boîtier (129b) est fixé sur le bâti (100) du doseur-distributeur (20).

15. Dispositif de réglage selon la revendication 14, caractérisé en ce que le moteur pas à pas (129) associé au détecteur à position réglable (126 ou 127) est susceptible d'être commandé en fonction de l'écart entre le poids mesuré d'un récipient rempli (101) et le poids étalon prédéterminé.

16. Dispositif selon l'une des revendications 7 à 15, caractérisé en ce que le premier vérin de commande (34) est un vérin pneumatique à double effet dont la tige de commande (34a) porte un patin amortisseur (123a) coulissant de façon étanche dans l'enceinte d'un amortisseur à liquide (123) dont les deux chambres (123b, 123c) sont remplies complètement avec un liquide et communiquent entre elles à l'aide d'un conduit de liaison (123d) muni d'une régulateur de débit (123e).

## Patentansprüche

1. Verfahren zur Einstellung von durch einen Dosierspender (20) dosierten und gespendeten Produktmengen, der in eine Abpackungsanlage des in Behälter, die aus einem Thermoplastband wärmegeformt werden, dosierten Produktes integriert und neben anderen Dosierspendern einer Reihe von Dosierspendern angeordnet ist, wobei sich die Reihe über dem und quer zur Richtung des vorbeilaufenden Thermoplastband(es) mit aufeinanderfolgenden Behälterquerreihen erstreckt, die parallel zu jener der Dosierspender verlaufen und sich schrittweise in Bandvorbeilaufrichtung mit diesem vorwärtsbewegen, und sich das Nahrungsmittel- oder pharmazeutische Produkt vorzugsweise in einem flüssigen und/oder pastösen Zustand befindet und der Dosierspender (20) jener Art ist, die in einem ersten zylindrischen Behältnis (3) einerseits eine obere Beschickungskammer (25), die über einen Beschickungskanal (22) mit einem ersten Produktreservoir verbunden ist, und andererseits eine untere Dosierkammer (26), einen Dosierkolben (28), der dicht in jenem ersten Behältnis (3) gleitet und dort jene Beschickungskammer (25) von jener Dosierkammer (26) trennt und einen zentralen Durchgang (31) umfaßt, der den Sitz (32b) für eine Klappe (32a) eines in Richtung Beschickungskammer (25) öffnenden Einlaßventils (32) darstellt, und eine erste Steuerröhre (2) umfaßt, die dicht in jenes erste Behältnis (3) hineingeht, in dessen Innerem sie an dem Dosierkolben (28) und außerhalb dessen sie am Kolben (34c) eines ersten Steuerzylinders (34) befestigt ist, dessen zylindrisches Teil (34b) auf einer Stütze oder einem Stützgestell (100) jenes ersten Behältnisses (3) montiert ist, wobei dieser Dosierspender (20) des weiteren eine zweite Steuerröhre (35) umfaßt, deren unteres Endteil (35a) dicht in jenes erste Behältnis (3) hineingeht, in jener ersten Steuerröhre (2) geführt ist und an ihrem oberen Ende fest mit einem Kolben (36a) eines in jener ersten Steuerröhre (2) integrierten zweiten Steuerzylinders (36) verbunden ist, sowie eine Spendekammer (24b), die einerseits mit dem Ausgang (23) der Dosierkammer (26) und andererseits mit mindestens einem Ausstoßstutzen (46) verbunden ist, der durch die Klappe (40a) eines Ausstoßventils (40) verschlossen werden kann, dadurch gekennzeichnet, daß man mindestens jeden n-ten der von demselben Dosierspender (20) mit einer dosierten Menge des Produktes (102) gefüllten Behälter (101) wiegt, wobei n eine ganze Zahl zwischen 1 und 1000 ist, jeden Gewichtsmeßwert mit einem vorbestimmten Eichwert vergleicht und mindestens eine der Hubendpositionen des Dosierkolbens (28) jenes Dosierspenders (20) schrittweise und während des Betriebes des Dosierspenders (20) und der Anlage im Sinne einer Verlängerung oder Verkürzung des Hubes des Dosierkolbens (28) einstellt, sobald die Diskrepanz zwischen dem gemessenen Ist-Gewicht und dem vorbestimmten Eichgewicht einen Grenzwert überschreitet, und man mit der Einstellung fortfährt, bis jene Diskrepanz verschwunden ist.

2. Einstellungsverfahren nach Anspruch 1, dadurch gekennzeichnet, daß man eine Gruppe von mehreren mit dem Produkt gefüllten Behältern (101) gleichzeitig und regelmäßig wiegt, das gemessene Gewicht mit einem für diese Gruppe von Behältern (101) vorbestimmten Eichwert vergleicht und den Hub des Dosierkolbens (28) schrittweise während des Betriebes des Dosierspenders (20) einstellt, bis das gemessene Gewicht dem für die Gruppen von Behältern (101) vorbestimmten Eichgewicht entspricht.

3. Einstellungsverfahren nach Anspruch 1 oder 2, dadurch gekennzeichnet, daß man das Gewicht der dosierten und in einen Behälter (101) gespendeten Menge an Produkt (102) einerseits durch Einstellen der oberen Endposition des Dosierkolbens (28), die dem Ende dessen Aufwärtshubes entspricht, mit Hilfe eines einstellbaren Anschlages (119), der von einem Schrittschaltmotor (117) angetrieben wird und als Aufwärtshub-Endanschlag für den Dosierkolben (28), der fest mit dem Kolben (34c) des ersten Steuerzylinders (34) mittels der ersten Steuerröhre (2) verbunden ist, dienen kann, einstellt und andererseits dadurch, daß man der dem Abwärtshubende des Dosierkolbens (28) entsprechenden unteren Endposition einen festen Hubendanschlag (121) zuordnet, der ebenfalls entweder mit dem Kolben (34c) des ersten Steuerzylinders (34) oder mit einem fest mit einem Teilstück (2b) der ersten Steuerröhre (2) verbundenen Glied (125) zusammenwirken kann, wobei sich das Teilstück (2b) permanent außerhalb des Behältnisses (3) und des ersten Steuerzylinders (34) befindet.

4. Einstellungsverfahren nach Anspruch 1 oder 2, dadurch gekennzeichnet, daß man das Gewicht der dosierten und in einen Behälter (101) gespendeten Menge einerseits durch Einstellen der dem Abwärtshubende des Dosierkolbens (28) entsprechenden unteren Endposition mit Hilfe eines einstellbaren Anschlages, der von einem Schrittschaltmotor angetrieben wird und mit dem Kolben (34c) des ersten Steuerzylinders (34) oder mit einem fest mit jenem Kolben (34c) verbundenen Glied (125) zusammenwirken und als Abwärtshub-Endanschlag jenes Dosierkolbens (28), der fest mit dem Kolben des ersten Steuerzylinders mittels der ersten Steuerröhre (2) und der Stange (34a) verbunden ist, dienen kann, einstellt und andererseits dadurch, daß man der dem Aufwärtshubende des Dosierkolbens (28) entsprechenden oberen Endposition einen festen Hubendanschlag zuordnet, der ebenfalls entweder mit jenem Kolben (34c) des ersten Steuerzylinders (34) oder mit einem fest mit der ersten Steuerröhre (2) oder der Stange (34a) des ersten Steuerzylinders (34) verbundenen Glied (125) zusammenwirken kann.

5. Einstellungsverfahren nach einem der Ansprüche 1 bis 4, dadurch gekennzeichnet, daß man als Abwärtshubendanschlag des Dosierkolbens (28) einen Hubendedetektor (126) verwendet, der gleichzeitig das Schließen der Klappe (40a) des Ausstoßventils (40) und das Öffnen der Klappe (32a) des Einlaßventils (32) und den Aufwärtshub des Dosierkolbens (28) auslöst.

6. Einstellungsverfahren nach einem der Ansprüche 1 bis 4, dadurch gekennzeichnet, daß man dem Abwärtshubendanschlag (121) des Dosierkolbens (28) einen Hubendedetektor (126) zuordnet, der gleichzeitig das Schließen der Klappe (40a) des Ausstoßventils (40) und das Öffnen der Klappe (32a) des Einlaßventils (32) wie auch den Aufwärtshub des Dosierkolbens (28) auslöst.

7. Vorrichtung zur Einstellung von durch einen Dosierspender (20) dosierten und gespendeten Produktmengen, wobei sich das Nahrungsmittel- oder pharmazeutische Produkt (102) vorzugsweise in einem flüssigen und/oder pastösen Zustand befindet und der Dosierspender (20) vorzugsweise jener Art ist, die in einem ersten zylindrischen Behältnis (3) einerseits eine obere Beschickungskammer (25), die über einen Beschickungskanal (22) mit einem ersten Reservoir für Produkt (102) verbunden ist, und andererseits eine untere Dosierkammer (26), einen Dosierkolben (28), der dicht in jenem ersten Behältnis (3) gleitet und dort jene Beschickungskammer (25) von jener Dosierkammer (26) trennt und einen zentralen Durchgang (31) umfaßt, der den Sitz (32b) für eine Klappe (32a) eines in Richtung Beschickungskammer (25) öffnenden Einlaßventils (32) darstellt, und eine erste Steuerröhre (2) umfaßt, die dicht in jenes erste Behältnis (3) hineingeht, in dessen Innerem sie an dem Dosierkolben (28) und außerhalb dessen sie am Kolben (34c) eines ersten Steuerzylinders (34) befestigt ist, dessen zylindrisches Teil (34b) auf einer Stütze oder einem Stützgestell (100) jenes ersten Behältnisses (3) montiert ist, wobei dieser Dosierspender (20) des weiteren eine zweite Steuerröhre (35) umfaßt, deren unteres Endteil (35a) dicht in jenes erste Behältnis (3) hineingeht, in jener ersten Steuerröhre (2) geführt ist und an ihrem oberen Ende fest mit einem Kolben (36a) eines in jener ersten Steuerröhre (2) integrierten zweiten Steuerzylinders (36) verbunden ist, sowie eine Spendekammer (24b), die einerseits mit dem Ausgang (23) der Dosierkammer (26) und andererseits mit mindestens einem Ausstoßstutzen (46) verbunden ist, der durch die Klappe (40a) eines Ausstoßventils (40) verschlossen werden kann, dadurch gekennzeichnet, daß der Dosierkolben (28) oder eines der Glieder (2, 34a, 34c, 125), die sich während seiner Auf- und Abwärtshübe mit ihm bewegen, wobei die Hübe dem Einlassen einer bestimmten Menge an Produkt (102) in die Dosierkammer (26) bzw. dem Verdrängen dieser Menge aus jener Dosierkammer (26) zu einem Ausstoßstutzen (46) hin entsprechen, zwei Hubendanschlägen (119, 121, 126, 127) zugeordnet ist, die jeweils eines der beiden Enden des Hubes des Dosierkolbens (28) bestimmen und von denen mindestens einer (beispielsweise 119) derart ist, daß seine Position während des Betriebes des Dosierspenders (20) und in Abhängigkeit von der zwischen dem gemessenen Gewicht einer dosierten und gespendeten Menge an Produkt (102) und einem vorbestimmten Eichgewicht bestehenden Diskrepanz einstellbar ist.

8. Einstellungsvorrichtung nach Anspruch 7, dadurch gekennzeichnet, daß der Hubendanschlag (119) mit einstellbarer Position teilweise in die obere Kammer des ersten Steuerzylinders (34) hineingeht und den Aufwärtshub des Kolbens (34c) jenes Zylinders (34) und des Dosierkolbens (28) begrenzen kann, und daß er weiterhin einen Schrittschaltmotor (117) umfaßt, dessen Abtriebswelle (117a) mit zwei Drehrichtungen über ein Schraubengetriebe (120) mit dem einstellbaren Anschlag (119) verbunden ist und dessen Gehäuse (117b) auf dem Stützgestell (100) des Dosierspenders (20) oder eines mit diesem fest verbundenen Glieds befestigt ist, wobei die Drehung und die Drehrichtung der Abtriebswelle (117a) jenes Schrittschaltmotors (117) in Abhängigkeit von der zwischen dem gemessenen Gewicht einer Menge von dosiertem und in einen Behälter (101) gespendetem Produkt (102) und einem vorbestimmten Eichgewicht bestehenden positiven oder negativen Diskrepanz gesteuert werden.

9. Einstellungsvorrichtung nach Anspruch 7 oder 8, dadurch gekennzeichnet, daß sie weiterhin Wiegevorrichtungen (103) für mindestens einen gefüllten Behälter oder eine Gruppe von gefüllten Behältern (101), einen Eichmechanismus (106a, 107, 109), eine Einheit (106b, 110) zum Vergleichen des mit den Wiegevorrichtungen (103) gemessenen Gewichts mit dem durch den Eichmechanismus (106a, 107, 109) vorbestimmten Eichgewicht sowie eine Steuerstromkreiseinheit (110 bis 116) umfaßt, die in Abhängigkeit von den von der Vergleichseinheit (110) abgegebenen Signalen im Sinne einer Reduzierung der zwischen dem gemessenen Gewicht eines gefüllten Behälters (101) oder einer Gruppe von Behältern und dem vorbestimmten Eichgewicht bestehenden Diskrepanz auf den Schrittschaltmotor (117) des einstellbaren Anschlags (119) einwirken kann.

10. Einstellungsvorrichtung nach einem der Ansprüche 7 bis 9, dadurch gekennzeichnet, daß der einstellbare Anschlag (119) axial in einem am oberen Ende jenes ersten Zylinders (34) montierten Führungsblock (118) geführt ist, mit dem Kolben (34c) jenes Zylinders (34) unter Begrenzung des Aufwärtshubes jenes Kolbens (34c) zusammenwirken kann und fest mit der Mutter (120a) des Schraubengetriebes (120) verbunden ist, dessen Mutter (120a) axial und drehfest in der axialen Bohrung (118b) des Führungsblocks (118) geführt ist und dessen Schraube (120b) fest mit der Abtriebswelle (117a) des Schrittschaltmotors (117) verbunden ist, wobei dessen Gehäuse (117b) am oberen Ende des ersten Steuerzylinders (34) montiert ist.

11. Einstellungsvorrichtung nach einem der Ansprüche 7 bis 10, dadurch gekennzeichnet, daß der zweite den Abwärtshub des Dosierkolbens (28) begrenzende Hubendanschlag (121) fest ist, am Boden des ersten Steuerzylinders (34) in der Nähe dessen unteren Endes vorgesehen ist und mit dem Kolben (34c) jenes ersten Zylinders (34) zusammenwirkt.

12. Einstellungsvorrichtung nach einem der Ansprüche 7 bis 11, dadurch gekennzeichnet, daß das Teilstück (2b) der ersten Steuerröhre (2), das sich außerhalb des Behältnisses (3) bewegt, oder das Teilstück der Stange (34a), das sich außerhalb des ersten Steuerzylinders (34) und des Stoßdämpfers (123) bewegt, oder der Verbindungsflansch (134) zwischen dem unteren Ende jener Stange (34a) und dem oberen Ende der ersten Steuerröhre (2) mit einem seitlichen Mitnehmer (125) ausgerüstet ist, der einem ersten Detektor (126) zugeordnet ist, dessen Position der Abwärtshubendposition des Dosierkolbens (28) entspricht und der gleichzeitig die Klappe (40a) des Ausstoßventils (40) zu- und die Klappe (32a) des Einlaßventils (32) aufsteuert und den Aufwärtshub des Dosierkolbens (28) auslöst, wenn er die Anwesenheit jenes Mitnehmers (125) erfaßt.

13. Einstellungsvorrichtung nach einem der Ansprüche 7 bis 11, dadurch gekennzeichnet, daß das Teilstück (2b) der ersten Steuerröhre (2), das sich außerhalb des Behältnisses (3) bewegt, oder das Teilstück der Stange (34a), das sich außerhalb des ersten Steuerzylinders (34) und des Stoßdämpfers (123) bewegt, oder der Verbindungsflansch (134) zwischen dem unteren Ende jener Stange (34a) und dem oberen Ende der ersten Steuerröhre (2) mit einem seitlichen Mitnehmer (125) ausgerüstet ist, der einem zweiten Detektor (127) zugeordnet ist, dessen Position der Aufwärtshubendposition des Dosierkolbens (28) entspricht und der gleichzeitig die Klappe (40a) des Ausstoßventils (40) auf- und die Klappe (32a) des Einlaßventils (32) zusteuert und den Abwärtshub des Dosierkolbens (28) auslöst, wenn er die Anwesenheit jenes Mitnehmers (125) erfaßt.

14. Einstellungsvorrichtung nach Anspruch 12 oder 13, dadurch gekennzeichnet, daß der Detektor (126 oder 127) derart ist, daß seine Position einstellbar ist, er über ein Schraubengetriebe (128) montiert ist, dessen Mutter (128a) fest mit dem Detektor (126 oder 127) verbunden und axial drehfest geführt ist und dessen Schraube (128b) an der Abtriebswelle (129a) eines Schrittschaltmotors (129) verkeilt ist, dessen Gehäuse (129b) auf dem Stützgestell (100) des Dosierspenders (20) befestigt ist.

15. Einstellungsvorrichtung nach Anspruch 14, dadurch gekennzeichnet, daß der dem Detektor (126 oder 127) mit einstellbarer Position zugeordnete Schrittschaltmotor (129) in Abhängigkeit von der zwischen dem gemessenen Gewicht eines gefüllten Behälters (101) und dem vorbestimmten Eichgewicht bestehenden Diskrepanz gesteuert werden kann.

16. Vorrichtung nach einem der Ansprüche 7 bis 15, dadurch gekennzeichnet, daß es sich bei dem ersten Steuerzylinder (34) um einen Pneumatikzylinder mit Doppelwirkung handelt, dessen Steuerstange (34a) einen Stoßdämpferschuh (123a) trägt, der dicht im Behältnis eines Hydraulikstoßdämpfers (123) gleitet, dessen beide Kammern (123b, 123c) ganz mit einer Flüssigkeit gefüllt sind und mit Hilfe einer mit einem Mengenregler (123e) ausgerüsteten Verbindungsleitung (123d) miteinander in Verbindung stehen.

## Claims

1. Process for adjusting the quantities of product dosed and dispensed by a doser-dispenser (20), which is incorporated in an installation for packing a dosed product in recipients made by thermoforming from a thermoplastic web and which is juxtaposed with other doser-dispensers of a row of doser-dispensers extending above the thermoplastic web and transversely with respect to the direction of advance of said web containing successive transverse rows of recipients parallel to that of the doser-dispensers and advancing step by step with said web in the direction of advance thereof, the food or pharmaceutical product preferably being in a liquid and/or pasty state and the doser-dispenser (20) being of the type comprising in a first cylindrical enclosure (3), on the one hand, an upper supply chamber (25) connected by a supply conduit (22) to a first product storage reservoir and, on the other hand, a lower dosing chamber (26), a doser piston (28) which slides tightly in said first enclosure (3) and separates said supply chamber (25) from said dosing chamber (26) and which comprises a central passage (31) constituting the seat (32b) for a flap (32a) of an admission valve (32) opening in the direction of the supply chamber (25), a first control tube (2) penetrating tightly in said first enclosure (3) in which it is fixed to the doser piston (28) and outside which it is fixed to the piston (34c) of a first control jack (34) of which the cylinder (34b) is mounted on a support or frame (100) of said first enclosure (3), this doser-dispenser (20) comprising, in addition, a second control tube (35) of which the lower end part (35a) penetrates tightly in said first enclosure (3), is guided in said first control tube (2) and is fast, at its upper end, with a piston (36a) of a second control jack (36) incorporated in said first control tube (2), as well as a dispensing chamber (24b) connected, on the one hand, to the outlet (23) of the dosing chamber (26) and, on the other hand, to at least one ejection pipe (46) adapted to be obturated by the flap (40a) of an ejection valve (40), characterized in that the weight of at least every nth of the recipients (101) filled by the same doser-dispenser (20) with a dosed quantity of the product (102), is measured, the whole number n being included between 1 and 1000, each weight value measured is compared with a predetermined standard value and at least one of the end-of-stroke positions of the doser piston (28) of said doser-dispenser (20) is adjusted step by step and during operation of the doser-dispenser (20) and of the installation, in the sense of increasing or decreasing the stroke of the doser piston (28) as soon as the difference between the real weight measured and the predetermined standard weight exceeds a limiting value, and such adjustment is continued until said difference disappears.

2. Process of adjustment according to Claim 1, characterized in that the weight of a group of several recipients (101) filled with the product is measured simultaneously and periodically, the weight measured is compared with a predetermined standard value for this group of recipients (101) and the stroke of the-doser piston (28) is adjusted step by step during operation of the doser-dispenser (20) until the measured weight corresponds to the predetermined standard weight for the groups of recipients (101).

3. Process of adjustment according to Claim 1 or 2, characterized in that the weight of the quantity of product (102) dosed and dispensed in a recipient (101) is adjusted, on the one hand, by adjusting the extreme upper position of the doser piston (28), position corresponding to the ascending end-of-stroke thereof, with the aid of an adjustable stop (119) driven by a step-by-step motor (117) and capable of serving as ascending end-of-stroke stop for the doser piston (28) fast with the piston (34) of the first control jack (34) via the first control tube (2), and, on the other hand, by associating with the lower extreme position corresponding to the descending end-of-stroke of the doser piston (28), a fixed end-of-stroke stop (121) likewise capable of cooperating either with the piston (34b) of the first control jack (34) or a member (125) fast with a section (2b) of the first control tube (2), section (2b) permanently located outside the enclosure (3) and the first control jack (34).

4. Process of adjustment according to Claim 1 or 2, characterized in that the weight of the quantity dosed and dispensed in a recipient (101) is adjusted, on the one hand, by adjusting the lower extreme position corresponding to the descending end-of-stroke of the doser piston (28) with the aid of an adjustable stop driven by a step-by-step motor and capable of cooperating with the piston (34c) of the first control jack (34) or with a member (125) fast with said piston (34c) and of serving as descending end-of-stroke stop of said doser piston (28) fast with the piston of the first control jack via the first control tube (2) and the rod (34a) and, on the other hand, by associating with the corresponding upper extreme position of the ascending end-of-stroke of the doser piston (28), a fixed end-of-stroke stop likewise capable of cooperating with said piston (34c) of the first control jack (34), either with a member (125) fast with the first control tube (2) or the rod (34c) of the first control jack (34).

5. Process of adjustment according to one of Claims 1 to 4, characterized in that an end-of-stroke detector (126) is used as descending end-of-stroke stop of the doser piston (28), which simultaneously triggers off closure of the flap (40a) of the ejection valve (40) and opening of the flap (32a) of the admission valve (32) and the ascending stroke of the doser piston (28).

6. Process of adjustment according to one of Claims 1 to 4, characterized in that there is associated with the descending end-of-stroke stop (121) of the doser piston (28) an end-of-stroke detector (126) which simultaneously triggers off closure of the flap (40a) of the ejection valve (40) and opening of the flap (32a) of the admission valve (32) as well as the ascending stroke of the doser piston (28).

7. Device for adjusting the quantities of product dosed and dispensed by a doser-dispenser (20), the food or pharmaceutical product (102) preferably being in a liquid and/or pasty state, and the doser-dispenser (20) preferably being of the type comprising in a first cylindrical enclosure (3), on the one hand, an upper supply chamber (25) connected by a supply conduit (22) to a first reservoir for storing the product (102) and, on the other hand, a lower dosing chamber (26), a doser piston (28) which slides tightly in said first enclosure (3) and separates said supply chamber (25) from said dosing chamber (26) and which comprises a central passage (31) constituting the seat (32b) for a flap (32a) of an admission valve (32) opening in the direction of the supply chamber (25), a first control tube (2) penetrating tightly in said first enclosure (3) in which it is fixed to the doser piston (28) and outside which it is fixed to the piston (34c) of a first control jack (34) of which the cylinder (34b) is mounted on a support or frame (100) of said first enclosure (3), this doser-dispenser (20) further comprising a second control tube (35) of which the lower end part (35a) penetrates tightly in said first enclosure (3), is guided in said first control tube (2) and is fast, at its upper end, with a piston (36a) of a second control jack (36) incorporated in said first control tube (2), as well as a dispensing chamber (24b) connected, on the one hand, to the outlet (23) of the dosing chamber (26) and, on the other hand, to at least one ejection pipe (46) adapted to be obturated by the flap (40a) of an ejection valve (40),
characterized in that the doser-piston (28) or one of the members (2, 34a, 34c, 125) moving therewith during its ascending and descending strokes, strokes corresponding respectively to the admission of a determined quantity of product (102) in the dosing chamber (26) and to the delivery of this quantity from said dosing chamber (26) towards the ejection pipe (46), is associated with two end-of-stroke stops (119, 121, 126, 127) of which each determines one of the two ends of the stroke of the doser piston (28) and of which at least one (for example 119) is of the type with adjustable position during operation of the doser-dispenser (20) and as a function of the difference existing between the measured weight of a dosed and dispensed quantity of product (102) and a predetermined standard weight.

8. Adjusting device according to Claim 7, characterized in that the end-of-stroke stop with adjustable position (119) penetrates partially in the upper chamber of the first control jack (34) and is capable of limiting the ascending stroke of the piston (34c) of said jack (34) and of the doser-piston (28), and it further comprises a step-by-step motor (117) of which the driven shaft (117a) with two directions of rotation is connected via a spindle and nut transmission (120) to the adjustable stop (119) and of which the housing (117b) is fixed on the frame (100) of the doser-dispenser (20) or a member fast therewith, the rotation and direction of rotation of the driven shaft (117a) of said step-by-step motor (117) being controlled as a function of the positive or negative difference between the measured weight of a quantity of product (102) dosed and dispensed in a recipient (101), and a predetermined standard weight.

9. Adjusting device according to one of Claims 7 and 8, characterized in that it further comprises weighing means (103) for at least one filled recipient or a group of filled recipients (101), a calibration mechanism (106a, 107, 109), a comparison unit (106b, 110) between the weight measured by the weighing means (103) and the standard weight predetermined by the calibration mechanism (106a, 107, 109), and a unit with control circuits (110 to 116) capable of acting on the step-by-step motor (117) of the adjustable stop (119) as a function of the signals issued from the comparison unit (110), in the sense of reducing the difference existing between the measured weight of a filled recipient (101) or of a group of recipients and the predetermined standard weight.

10. Adjusting device according to one of Claims 7 to 9, characterized in that the adjustable stop (119) is axially guided in a guiding unit (118) mounted on the upper end of said first jack (34), is capable of cooperating with the piston (34c) of the latter by limiting the ascending stroke of said piston (34c) and is fast with the nut (120a) of the spindle and nut transmission (120) of which the nut (120a) is guided axially and so as to be immobile in rotation in the axial bore (118b) of the guiding unit (118) and of which the spindle (120b) is fast with the driven shaft (117a) of the step-by-step motor (117), the housing (117b) thereof being mounted on the upper end of the first control jack (34).

11. Adjusting device according to one of Claims 7 to 10, characterized in that the second end-of-stroke stop (121) limiting the descending stroke of the doser piston (28) is fixed, is provided at the bottom of the first control jack (34) near the lower end thereof and cooperates with the piston (34c) of said first jack (34).

12. Adjusting device according to one of Claims 7 to 11, characterized in that the position is the section (2b) of the first control tube (2) moving outside the enclosure (3), or the section of the rod (34a) moving outside the first control jack (34) and the damper (123) or the connection flange (134) between the lower end of said rod (34a) and the upper end of the first control tube (2), is provided with a lateral follower dog (125) associated with a first detector (126) of which the position corresponds to the descending end-of-stroke position of the doser piston (28) and which, on detecting the presence of said follower dog (125), simultaneously controls closure of the flap (40a) of the ejection valve (40) and opening of the flap (32a) of the admission valve (32) as well as triggering off of the ascending stroke of the doser piston (28).

13. Adjusting device according to one of Claims 7 to 11, characterized in that the section (2b) of the first control tube (2) moving outside the enclosure (3), or the section of the rod (34a) moving outside the first control jack (34) and the damper (123) or the connection flange (134) between the lower end of said rod and the upper end of the first control tube (2), is provided with a lateral follower dog (125) associated with a second detector (127) whose position corresponds to the ascending end-of-stroke position of the doser piston (28) and which, on detecting the presence of said follower dog (125), simultaneously controls opening of the flap (40a) of the ejection valve (40) and closure of flap (32a) of the admission valve (32) as well as triggering off of the descending stroke of the doser piston (28).

14. Adjusting device according to one of Claims 12 and 13, characterized in that the detector (126 or 127) is of the type with adjustable position, is mounted by a spindle and nut transmission (128) of which the nut (128a) is fast with the detector (126 or 127) and guided axially so as to be immobile in rotation and of which the spindle (128b) is keyed on the output shaft (129a) of a step-by-step motor (129) whose housing (129b) is fixed on the frame (100) of the doser-dispenser (20).

15. Adjusting device according to Claim 14, characterized in that the step-by-step motor (129) associated with the adjustable-position detector (126 or 127) is capable of being controlled as a function of the difference between the measured weight of a filled recipient (101) and the predetermined standard weight.

16. Device according to one of Claims 7 to 15, characterized in that the first control jack (34) is a pneumatic double-acting jack of which the control rod (34a) bears a damping shoe (123a) sliding tightly in the enclosure of a liquid damper (123) of which the two chambers (123b, 123c) are completely filled with a liquid and communicate with one another with the aid of a connecting conduit (123d) provided with a flow regulator (123e).
